(19) Europäisches Patentamt
European Patent Office
Office européen des brevets

(11) Veröffentlichungsnummer : **0 319 474 B1**

(12) **EUROPÄISCHE PATENTSCHRIFT**

(45) Veröffentlichungstag der Patentschrift : **06.05.92 Patentblatt 92/19**

(51) Int. Cl.$^5$ : **C09B 45/01**

(21) Anmeldenummer : **88810800.8**

(22) Anmeldetag : **23.11.88**

# (54) Verfahren zur Herstellung von 1:2-Metallkomplexazofarbstoffen.

(30) Priorität : **04.12.87 CH 4738/87**

(43) Veröffentlichungstag der Anmeldung : **07.06.89 Patentblatt 89/23**

(45) Bekanntmachung des Hinweises auf die Patenterteilung : **06.05.92 Patentblatt 92/19**

(84) Benannte Vertragsstaaten : **BE CH DE FR GB LI**

(56) Entgegenhaltungen :
**EP-A- 0 241 414**
**DE-C- 493 895**

(73) Patentinhaber : **CIBA-GEIGY AG**
**Klybeckstrasse 141**
**CH-4002 Basel (CH)**

(72) Erfinder : **Püntener, Alois, Dr.**
**Pulverweg 13**
**CH-4310 Rheinfelden (CH)**
Erfinder : **Parisot, Daniel**
**Bellevue D 52, rue des collonges**
**F-69230 Saint-Genis-Laval (FR)**

EP 0 319 474 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Kupplung von 1-Diazo-2-hydroxynaphthalin-4-sulfonsäure bzw. von der entsprechenden eine Nitrogruppe enthaltenden Komponente auf eine Kupplungskomponente der Benzol-, Naphthalin- oder Pyrazolon-Reihe, die eine Hydroxy- oder Aminogruppe in Nachbarstellung zu der Kupplungskomponente enthält und die anschliessende Metallisierung verläuft in einigen Fällen langsam und mit unbefriedigenden Ausbeuten.

In den letzten Jahren ist man zunehmend bestrebt, Herstellungsverfahren für Farbstoffe oder deren Zwischenprodukte zu automatisieren und zu optimieren, und zwar sowohl was den Herstellungsprozess anbetrifft, als auch hinsichtlich der Aufarbeitung. Um hier zu befriedigenden Ergebnissen zu gelangen, ist man auf Verfahren angewiesen, die sich durch folgende Kriterien auszeichnen: möglichst quantitative Ausbeute, reproduzierbar gute Qualität, Umsetzungen mit möglichst wenig Aufarbeitungsschritten sowie schnelle Umsetzungen, die eine hohe Zahl von Umsetzungen pro Zeiteinheit ermöglichen.

Es wurde nun gefunden, dass man diese Ziele mit dem erfindungsgemässen Verfahren weitgehend erreichen kann.

Das erfindungsgemässe Verfahren zur Herstellung von 1:2-Metallkomplexazofarbstoffen der Formel

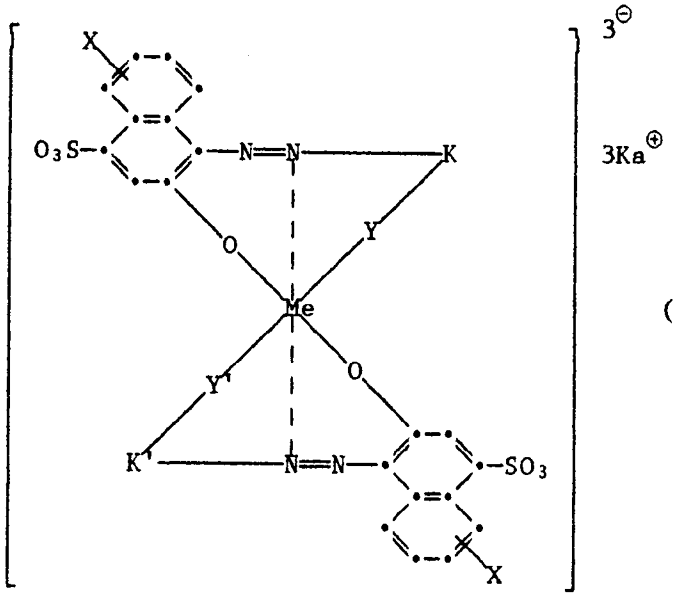

(1),

worin X je Wasserstoff, Halogen oder Nitro ist, K und K′ unabhängig voneinander den Rest einer Kupplungskomponente der Benzol-, Naphthalinoder Pyrazolon-Reihe bedeuten, Y und Y′ je den -O- oder -N(R)-Rest bedeuten, wobei R Wasserstoff, $C_1$-$C_4$-Alkyl oder Phenyl ist, Me Chrom oder Kobalt und Ka ein Kation ist, und Y und Y′ in Nachbarstellung zur Azogruppe an K und K′ gebunden sind, durch Kupplung und Metallisierung, ist dadurch gekennzeichnet, dass man in wässriger Lösung eine Diazokomponente der Formel

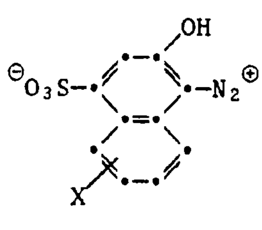

(2),

worin X die unter Formel (1) angegebene Bedeutung hat, in Gegenwart der 5 bis 30-fach molaren Menge Natrium- und/oder Kaliumchlorid, bezogen auf die Molmenge Diazokomponente, und in Gegenwart einer das Chrom- oder Kobaltatom abgebenden Verbindungen auf Kupplungskomponenten der Formel

HK-YH und HK′-Y′H (3),

worin K, K′, Y und Y′ die unter Formel (1) angegebenen Bedeutungen haben, kuppelt.

Die Kupplung von Verbindungen der Formel (2) auf Verbindungen der Formel (3) ist als schwierig bekannt. So wurde versucht mit Hilfe verschiedener Katalysatoren, wie z.B. in Gegenwart von Zinksalzen oder in Gegenwart von Calzium- oder Magnesiumsalzen, oder durch Kupplung unter Stickstoffatmosphäre die Ausbeute zu verbessern. Zinksalze verbessern die Ausbeute ebenso wie Calcium- und Magnesiumsalze; nachteilig ist der störenden Salzgehalt nach beendeter Reaktion, wodurch eine Zwischenabscheidung des gebildeten Azofarbstoffes im allgemeinen notwendig ist.

Ferner kann das bisher übliche Herstellungsverfahren für symmetrische 1:2-Metallkomplexazofarbstoffe, die pro Metallatom zwei identische Azoliganden enthalten, oder gemischte 1:2-Metallkomplexazofarbstoffe, die aus mindestens zwei symmetrischen und mindestens einem asymmetrischen Komplex bestehen, z.B. durch folgende Schritte charakterisiert werden:

– Diazotierung eines Amins, welches eine zur Komplexbildung geeignete Gruppe enthält, bei tiefer Temperatur;
– Kupplung auf eine Kupplungskomponente, welche eine zur Komplexbildung geeignete Gruppe enthält, bei zumeist tiefer Temperatur;
– Isolierung des Kupplungsproduktes durch Aussalzen und Filtration;
– Lösen oder Suspendieren des Kupplungsproduktes;
– Metallisierung des Kupplungsproduktes; und
– Isolierung des 1:2-Metallkomplexazofarbstoffes.

Nachteil dieser Verfahrensweise sind z.B. die folgenden zeit- und materialaufwendigen Schritte:

– Isolierung des Kupplungsproduktes z.B. durch Aussalzen und Abfiltration;
– Erneutes Lösen des Kupplungsproduktes gegebenenfalls unter Erwärmen für die Metallisierungsstufe.

Bekannt sind ferner Herstellungsverfahren für symmetrische oder gemischte 1:2-Metallkomplexazofarbstoffe ohne Zwischenisolierung des Kupplungsproduktes, indem man die Kupplungsreaktion und die Metallisierung in organischen Lösungsmitteln insbesondere wasserhaltigen, organischen mit Wasser mischbaren Lösungsmitteln durchführt.

Nachteil dieser Verfahrensweise ist die notwendige Abscheidung des organischen Lösungsmittels bzw. die aufwendige Trennoperation von Farbstoff, Wasser und organischem Lösungsmittel.

Nachteil dieser bekannten Verfahrensweise ist ferner die grössere Abwasserbelastung gegenüber der rein wässrigen Verfahrensweise.

Es ist überraschend, dass das erfindungsgemässe Verfahren eine deutliche Steigerung der Ausbeute bei der Kupplung in Gegenwart von Natrium- und/oder Kaliumchlorid und der metallabgebenden Verbindung ergibt, dass die intermediär gebildeten Azofarbstoffe ohne Zwischenabscheidung direkt den 1:2-Metallkomplex liefern, und dass die Umsetzung bereits nach sehr kurzer Zeit nahzu vollständig beendet ist.

Bei der erfindungsgemässen Verfahrensweise kann man überraschenderweise

– auf die aufwendige Zwischenisolierung des Kupplungsproduktes verzichten;
– Kupplung und Metallisierung als Eintopfverfahren durchführen;
– die Reaktionszeit verkürzen durch höhere Kupplungstemperatur und sofort mögliche Metallisierung;
– Umsetzungen in konzentrierter Lösung durchführen.

Gemäss der erfindungsgemässen Verfahrensweise können auch empfindliche Azoverbindungen in guter Ausbeute und Reinheit erhalten werden, da die gebildete Azoverbindung sofort nach erfolgter Kupplung durch intermediäre Komplexierung mit dem in der Reaktionsmasse vorhandenen Metall auch im sauren pH-Bereich stabilisiert werden kann.

Eine bevorzugte Ausführungsform des erfindungsgemässen Verfahrens ist dadurch gekennzeichnet, dass die Kupplung und die Metallisierung unter Inertgasatmosphäre, insbesondere unter Stickstoffgasatmosphäre, erfolgt, wobei Kupplung und Metallisierung in einem geschlossenen Reaktionsgefäss erfolgen.

Die Kupplung der Diazokomponente der Formel (2) auf mindestens eine Kupplungskomponente der Formel (3) erfolgt in der Regel bei Temperaturen oberhalb von 0°C, z.B. 0 bis 100°C. Vorteilhaft erfolgt die Kupplung bei einer Temperatur von 5 bis 100°C, vorzugsweise 20 bis 70°C, insbesondere 35 bis 50°C. Insbesondere erfolgt die Kupplung adiabatisch, wobei eine Anfangstemperatur von mindestens 35°C sich als besonders vorteilhaft erwiesen hat.

Kupplungen können im saurem und im alkalischen pH-Bereich ausgeführt werden. Für das erfindungsgemässe Verfahren hat sich die Kupplung im alkalischen pH-Bereich als besonders vorteilhaft erwiesen. Im allgemeinen hat sich ein pH-Bereich von 9 bis 11, insbesondere von 9,5 bis 10,5, als bevorzugt erwiesen.

In dem erfindungsgemässen Verfahren wird die Kupplung bevorzugt in Gegenwart der 5 bis 10-fachen molaren Menge, insbesondere der 6 bis 8-fachen molaren Menge, Natrium- und/oder Kaliumchlorid ausgeführt.

Die Metallisierung erfolgt in der Regel bei einer Temperatur von 40 bis 160°C, vorzugsweise 70 bis 130°C, wobei bei einer Temperatur oberhalb von 100°C in einem geschlossenen Gefäss unter Druck (Ueberdruck) gearbeitet wird, wobei sich ein Druck von 1 bis 6, insbesondere 2 bis 4, bar als vorteilhaft erwiesen hat.

Das molare Verhältnis der Diazokomponente der Formel (2) zu der Kupplungskomponente der Formel (3) bzw. zu der Summe der Kupplungskomponenten der Formel (3) ist 0,8:1,2 bis 1,2:0,8, insbesondere 0,95:1,05

bis 1,05:0,95.

Das erfindungsgemässe Verfahren ist möglichst in Abwesenheit von Sulfat auszuführen.

Durch das Einsetzen entsprechend erhöhter Metallsalzkonzentrationen und Absenkung des pH-Wertes auf 0 bis 2,5 nach Herstellung der 1:2-Metallkomplexazofarbstoffe können 1:1-Metallkomplexazofarbstoffe erhalten werden.

Die Diazokomponenten der Formel (2), die nach dem erfindungsgemässen Verfahren eingesetzt werken können, sind insbesondere 1-Diazo-2-hydroxynaphthalin-4-sulfonsäure und 1-Diazo-6-nitro-2-hydroxynaphthalin-4-sulfonsäure. Die Diazokomponenten der Formel (2) sind bekannt und werden nach bekannten Verfahren hergestellt.

Die Kupplungskomponenten der Formel (3) sind bekannt und werden nach bekannten Verfahren hergestellt. In dem erfindungsgemässen Verfahren werden Kupplungskomponenten eingesetzt, die der Benzol-, Naphthalin oder Pyrazolon-Reihe angehören.

Die Kupplungskomponenten der Formel (3) können ausser durch die Hydroxygruppe noch durch folgende Substituenten substituiert sein: $C_1$-$C_6$-Alkyl, $C_1$-$C_6$-Alkoxy, $C_2$-$C_6$-Alkanoylamino, $C_2$-$C_6$-Alkanoyl, $C_1$-$C_6$-Alkoxycarbonylamino, Phenyl, Halogen, Hydroxy, Sulfo, Sulfonamid und Sulfongruppen.

Als $C_2$-$C_6$-Alkanoylamino kommt z.B. Acetylamino, Propionylamino und Butyrylamino in Betracht.

Als $C_2$-$C_6$-Alkanoyl kommt z.B. Acetyl, Propinyl und Butyryl in Betracht.

Als $C_1$-$C_6$-Alkoxycarbonylamino kommt z.B. Methoxycarbonylamino und Aethoxycarbonylamino in Betracht.

Als $C_1$-$C_6$-Alkyl kommt z.B. Methyl, Aethyl, Propyl, Isopropyl, Butyl, sek.-Butyl, tert.-Butyl, Isobutyl, Pentyl und Hexyl in Betracht.

Als $C_1$-$C_6$-Alkoxy kommt z.B. Methoxy, Aethoxy, Propoxy, Isopropoxy und Butoxy in Betracht.

Als Halogen kommt z.B. Fluor, Brom und insbesondere Chlor in Betracht.

Als Sulfonamido kommt z.B. $-SO_2NH_2$, $SO_2NHC_1$-$C_6$-Alkyl, wie z.B.$SO_2NHCH_3$ und $-SO_2NNHC_2H_5$ und $-SO_2N(C_1$-$C_6$-Alkyl$)_2$ wie z.B. $-SO_2N(CH_3)_2$ und $-SO_2N(C_2H_5)_2)$ sowie

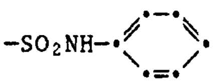 ,

wobei der Phenylrest substituiert sein kann, z.B. durch Sulfo oder Carboxy, in Betracht.

Als Sulfongruppe kommt z.B. $-SO_2$-$C_1$-$C_6$-Alkyl wie $-SO_2$-$CH_3$ und $-SO_2$-Aryl wie Phenylsulfonyl in Betracht.

Gemäss einer bevorzugten Ausführungsform des erfindungsgemässen Verfahrens verwendet man Kupplungskomponenten der Formel (3), worin K und/oder K′ ein Benzol-, Naphthalin- oder 1-Phenyl-3-methylpyrazol-5-on-Rest ist, der ein bis drei der oben genannten Substituenten enthalten kann; insbesondere bedeutet K den Naphthylrest.

Besonders geeignete Kupplungskomponenten sind Phenole, die mit $C_1$-$C_6$-Alkyl und/oder $C_1$-$C_6$-Alkanoylamino, $C_2$-$C_6$-Alkanoyl, $C_1$-$C_6$-Alkoxycarbonylamino und Hydroxy substituiert sind und vor allem Naphthole, die gegebenenfalls mit Chlor, $C_2$-$C_6$-Alkanoylamino-, $C_1$-$C_6$-Alkoxycarbonylamino-, Sulfo, Sulfonamid- oder Sulfongruppen substituiert sind, wie z.B. 4-Methylphenol, 4-t-Butylphenol, 2,4-Dimethylphenol, 2-Acetylamino-4-methylphenol, Resorcin, 4-Acetylresorcin, 1- oder 2-Naphthol, 1-Naphthol-3-, -4- oder -5-sulfosäure, 2-Naphthaol-3-, -4-, -5-, -6-, -7- oder -8-sulfosäure, 2-Naphthol-6-sulfamid, 1-Acetylamino-7-naphthol, 1-Acetylamino-6-naphthol, 1-Propionylamino-7-naphthol und 1-Carbomethoxyamino-7-naphthol. Als Kupplungskomponente der Pyrazolon-Reihe kommt z.B. 1-Phenyl-3-methylpyrazol-5-on in Betracht.

Gemäss einer besonders bevorzugten Ausführungsform des erfindungsgemässen Verfahrens haben K und K′ und Y und Y′ identische Bedeutungen, so dass symmetrische Metallkomplexe gebildet werden.

Eine ganz besonders bevorzugte Ausführungsform des erfindungsgemässen Verfahrens ist dadurch gekennzeichnet, dass man als Kupplungskomponente der Formel (3) Resorcin, 1-Phenyl-3-methyl-5-pyrazolon oder 1- oder 2-Naphthol, oder 2-Naphthylamin verwendet, wobeC1i die Kupplungskomponenten substituiert sein können durch Halogen, $C_1$-$C_4$-Alkyl, Sulfamoyl, $C_2$-$C_5$-Alkanoylamino, $C_2$-$C_5$-Alkanoyl, $C_2$-$C_5$-Alkoxycarbonylamino, $C_1$-$C_4$-Alkoxy, Sulfo, Hydroxy oder Phenyl.

Interessante Farbstoffe werden gebildet, wenn man als Kupplungskomponente der Formel (3) 2-Naphthol oder 1-Phenyl-3-methyl-5-pyrazolon, insbesondere 2-Naphthol, verwendet.

Eine besonders interessante Ausführungsform des erfindungsgemässen Verfahrens ist dadurch gekennzeichnet, dass man eine Diazokomponente der Formel (2) verwendet, worin X Nitro oder Wasserstoff, insbesondere Nitro, bedeutet.

Eine ganz besonders interessante Ausführungsform des erfindungsgemässen Verfahrens ist dadurch gekennzeichnet, dass man eine Diazokomponente der Formel

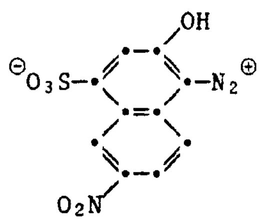

(4)

in Gegenwart der 5- bis 10-fach molaren Menge Natriumchlorid und in Gegenwart von Natriumchromsalicylat auf 2-Naphthol kuppelt.

Als das Chrom- oder Kobaltatom abgebende Verbindungen kommen z.B. die üblichen Salze oder Komplexverbindungen dieser Metalle in Betracht, wie z.B. Chrom(III)-chlorid, Chrom(III)-fluorid, Chrom(III)-acetat, $Cr(OH)SO_4$, Chrom(III)-formiat, Chromtartrat, Kobalt(II)-sulfat, Kobalt(II)-acetat, Kobalttartrat, frisch gefälltes Kobalt(II)-hydroxid; sowie komplexe Chromverbindungen, aliphatische Dicarbonsäuren, Hydroxycarbonsäuren oder aromatische Hydroxycarbonsäuren, wie z.B. Natriumchromsalicylat.

Eine wichtige Verfahrensweise des erfindungsgemässen Verfahrens ist dadurch gekennzeichnet, dass man in Gegenwart einer das Chrom- oder Kobaltatom abgebenden Verbindung, insbesondere in Gegenwart einer das Chromatom abgebenden Verbindung, kuppelt.

Insbesondere ist in dem erfindungsgemässen Verfahren das molare Verhältnis von Diazokomponente zu der Kupplungskomponente bzw. zu der Summe aller eingesetzten Kupplungskomponenten 0,9:1,0 bis 1,1:1,0.

Insbesondere ist in dem erfindungsgemässen Verfahren das molare Verhältnis der Diazokomponente bzw. der Summe der Kupplungskomponenten zu dem Metallisierungsmittel 1,7:1,0 bis 2,3:1,0 und insbesondere 1,9:1,0 bis 2,1:1.

Im allgemeinen hat sich in dem erfindungsgemässen Verfahren ein Ueberschuss an Metallisierungsmittel von 1 bis 15 Molprozent als vorteilhaft erwiesen.

Die erfindungsgemäss erhaltenen Farbstoffe liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die erfindungsgemäss erhaltenen Farbstoffe können nach an sich bekannten Methoden isoliert und zu brauchbaren, trockenen Färbepräparaten verarbeitet werden. Die Isolierung erfolgt vorzugsweise bei möglichst niedrigen Temperaturen durch Aussalzen und Filtrieren oder durch Umkehrosmose oder Ultrafiltration. Die filtrierten Farbstoffe können gegebenenfalls nach Zugabe von Coupagemitteln und/oder Puffermitteln, z.B. nach Zugabe eines Gemisches gleicher Teile Mono- oder Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen. Ferner kann die Reaktionslösung der Farbstoffe gegebenenfalls unter Beimengung üblicher Zusätze als Flüssigformulierung verwendet werden, oder die isolierten Farbstoffe können auf übliche Weise zu flüssigen Färbepräparaten verarbeitet werden.

Die nach dem erfindungsgemässen Verfahren erhaltenen 1:2-Metallkomplex- azofarbstoffe eignen sich zum Färben und Bedrucken verschiedenster Stoffe wie Holz oder Zellulose, vor allem aber zum Färben tierischer Materialien, wie Seide, Leder und insbesondere Wolle, aber auch zum Färben und Bedrucken synthetischer Fasern aus Superpolyamiden (insbesondere Polyamid 6 und Polyamid 66), Superpolyurethanen oder Polyacrylnitril. Sie sind vor allem zum Färben aus schwach alkalischem, neutralem oder schwach saurem, vorzugsweise essigsaurem Bad geeignet. Die so erhaltenen Färbungen sind gleichmässig, sehr brillant und haben gute Allgemeinechtheiten, insbesondere gute Licht- und Nassechtheiten.

Das genannte Textilmaterial kann dabei in den verschiedensten Verarbeitungsformen vorliegen, wie z.B. als Faser, Garn, Gewebe oder Gewirke.

Aus der EP-A-241 414 ist ein ähnliches Verfahren bekannt, welches jedoch nicht alle vorteilhaften Eigenschaften des erfindungsgemässen Verfahrens aufweist.

In dem folgenden Beispiel stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Unter Stickstoffatmosphäre werden 60 Teile Wasser in das Reaktiongefäss vorgelegt und dann 39,8 Teile 1-Diazo-6-nitro-2-hydroxynaphthalin-4-sulfonsäure zugegeben. Die gut gerührte gelbe Suspension wird dann mit 50 Teilen Eis versetzt. Die Temperatur beträgt 0°. Anschliessend stellt man durch Zugabe von

33,2 Teilen einer 30 %-igen wässrigen Natriumhydroxid-Lösung den pH-Wert auf 2,5. Die Temperatur steigt auf ca. 20°C. Mit 30 %-iger wässriger Natriumhydroxid-Lösung wird ein pH-Wert von 8 eingestellt, 156,3 Teile einer Natriumchromsalicylat- Lösung, die 3,5 Teile Chrom enthält, zugegeben und mit 60 Teilen Natriumchlorid (oder 70 Teilen Kaliumchlorid) versetzt. Innerhalb von einer Stunde lässt man bei einer TemperNaphtholatur von 20 bis 40° eine Lösungg, bestehend aus 50 Teilen Wasser, 21,5 Teilen 2-Naphthol und 18,6 Teilen einer 30 %-igen wässrigen Natriumhydroxidlösung, zutropfen, so dass der pH-Wert nicht über 10 steigt. Nach der vollendeten Zugabe beträgt die Temperatur ca. 40°. Bei pH-Wert 10 und einer Temperatur von 40° wird eine Stunde weitergerührt bis keine 1-Diazo-6-nitro-2-hydroxynaphthalin-4-sulfonsäure mehr nachweisbar ist. Anschliessend wird auf Rückflusstemperatur erwärmt und bis die Metallisierung beendet ist bei dieser Temperatur gehalten, wobei der pH-Wert 10 beträgt. Anschliessend wird die Stickstoff-Einleitung beendet, die Suspension mit 32 %-iger wässriger Salzsäure auf pH-Wert 9 gestellt, ca. 80 Teile Eis werden zugesetzt und bei einer Temperatur von höchstens 70° 60 Teile Kaliumchlorid zugegeben und 30 Minuten gerührt, anschliessend werden nochmals 60 Teile Kaliumchlorid zugegeben und erneut 30 Minuten gerührt. Man erhält eine starke Ausfällung des gebildeten Farbstoffes. Nach Filtration wird der erhaltene Farbstoff der Formel

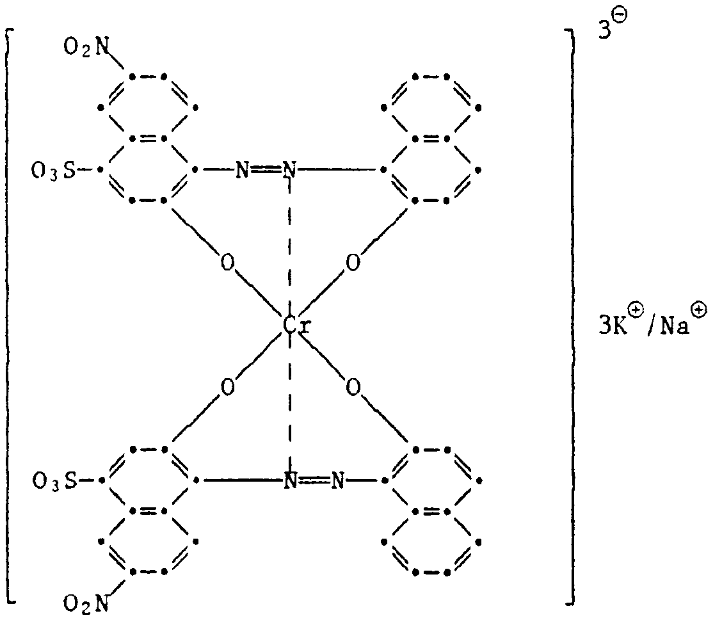

bei 70° im Vakuum getrocknet. Der Farbstoff färbt Wolle und Leder in schwarzen Tönen. Verwendet man zum Aussalzen des Farbstoffes eine äquimolare Menge Natriumchlorid oder Natriumsulfat oder Salzmischungen, so erhält man das Natriumsalz oder eine Mischung aus Natrium- und Kaliumsalz des angegebenen Farbstoffs.

Beispiel 2:

Verfährt man wie in Beispiel 1 angegeben, verwendet jedoch statt 60 Teilen Natriumchlorid (bzw. 70 Teilen Kaliumchlorid) 100 Teile Natriumchlorid (bzw. 150 Teile Kaliumchlorid) und salzt den Farbstoff mit 30 Teilen Kaliumchlorid aus, so erhält man den gleichen Farbstoff mit gleich guten Eigenschaften.

Beispiel 3:

Verfährt man wie in Beispiel 1 angegeben, verwendet jedoch statt 60 Teilen Natriumchlorid (bzw. 70 Teilen Kaliumchlorid) 45 Teile Natriumchlorid (bzw. 55 Teile Kaliumchlorid) und salzt den Farbstoff mit 80 Teilen Kaliumchlorid aus, so erhält man den gleichen Farbstoff mit gleich guten Eigenschaften.

Beispiel 4:

Verfährt man wie in Beispiel 1 angegeben, legt jedoch statt 60 Teilen Wasser 360 Teile Wasser zur Lösung der Diazoverbindung vor, verwendet statt 60 Teilen Natriumchlorid (bzw. 70 Teilen Kaliumchlorid) 220 Teile Natriumchlorid (bzw. 280 Teile Kaliumchlorid) und salzt den Farbstoff mit 100 Teilen Kaliumchlorid aus, so erhält man den gleichen Farbstoff mit gleich guten Eigenschaften.

Beispiele 5 und 6:

Verfährt man wie in Beispiel 1 angegeben, verwendet jedoch statt 39,8 Teilen 1-Diazo-6-nitro-2-hydroxynaphthalin-4-sulfonsäure eine äquimolare Menge der in Tabelle 1 in Spalte 2 in Form der freien Säure angegebenen Diazokomponenten und statt 21,5 Teilen 2-Naphthol eine äquimolare Menge der in Spalte 3 angegebenen Kupplungskomponenten, so erhält man analoge Farbstoffe, die Wolle und Leder in den in Spalte 4 angegebenen Farbtönen färben.

Tabelle 1

| Bsp. | Diazokomponente | Kupplungskomponente | Nuance auf Wolle und Leder |
|---|---|---|---|
| 5 | 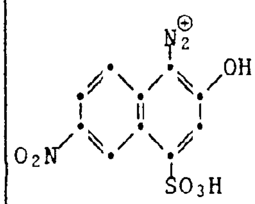 | 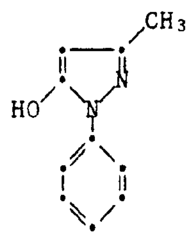 | bordeaux |
| 6 | 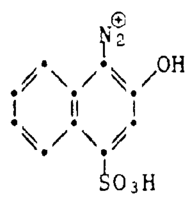 | 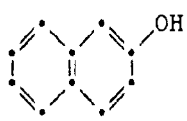 | marine-blau |

Beispiel 7:

Verfährt man wie in Beispiel 1 angegeben, verwendet jedoch anstelle einer Natriumchromsalicylat-Lösung eine äquimolare Menge Kobalttartrat-Lösung, so erhält man den entsprechenden Kobaltkomplex, der Wolle und Leder in einem korinth Farbton färbt.

Das gleiche gilt für Beispiel 5 mit einer rot-braunen und Beispiel 6 mit einer violetten Nuance auf Wolle und Leder.

## Patentansprüche

1. Verfahren zur Herstellung von 1:2-Metallkomplexazofarbstoffen der Formel

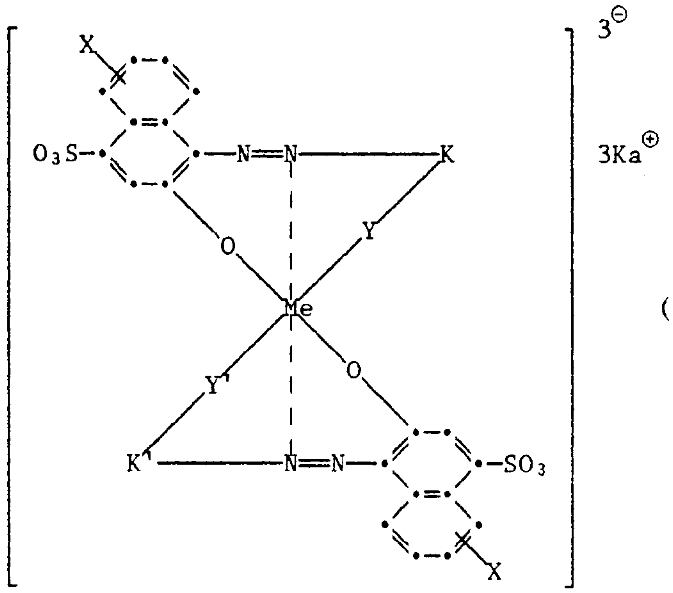

(1),

worin X je Wasserstoff, Halogen oder Nitro ist, K und K′ unabhängig voneinander den Rest einer Kupplungskomponente der Benzol-, Naphthalinoder Pyrazolon-Reihe bedeuten, Y und Y′ je denn -O- oder -N(R)-Rest bedeuten, wobei R Wasserstoff, $C_1$-$C_4$-Alkyl oder Phenyl ist, Me Chrom oder Kobalt und Ka ein Kation ist, und Y und Y′ in Nachbarstellung zur Azogruppe an K und K′ gebunden sind, durch Kupplung und Metallisierung, dadurch gekennzeichnet, dass man in wässriger Lösung eine Diazokomponente der Formel

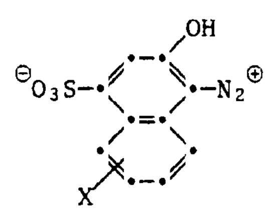

(2),

worin X die unter Formel (1) angegebene Bedeutung hat, in Gegenwart der 5 bis 30-fach molaren Menge Natrium- und/oder Kaliumchlorid, bezogen auf die Molmenge Diazokomponente, und in Gegenwart einer das Chrom- oder Kobaltatom abgebenden Verbindungen auf Kupplungskomponenten der Formel

HK-YH und HK′-Y′H (3)

worin K, K′, Y und Y′ die unter Formel (1) angegebenen Bedeutungen haben, kuppelt.

2. Verfahren gemäss Anspruch 1, dadurch gekennzeichnet, dass die Kupplung und Metallisierung unter Inertgasatmosphäre, insbesondere unter Stickstoffatmosphäre, erfolgt.

3. Verfahren gemäss einem der Ansprüche und 2, dadurch gekennzeichnet, dass die Kupplung bei einer Temperatur von 5 bis 100°C, vorzugsweise 20 bis 70°C, insbesondere 35 bis 50°C, erfolgt.

4. Verfahren gemäss einem der Ansprüche 1 bis 3, dadurch gekennzeichnet, dass die Kupplung bei einem pH-Wert von 9 bis 11, insbesondere von 9,5 bis 10,5, erfolgt.

5. Verfahren gemäss einem der Ansprüche 1 bis 4, dadurch gekennzeichnet, dass die Metallisierung bei einer Temperatur von 40 bis 160°C, vorzugsweise 70 bis 130°C, erfolgt.

6. Verfahren gemäss einem der Ansprüche 1 bis 5, dadurch gekennzeichnet, dass die Metallisierung unter einem Druck von 1 bis 6 bar, insbesondere von 2 bis 4 bar, erfolgt.

7. Verfahren gemäss einem der Ansprüche 1 bis 6, dadurch gekennzeichnet, dass man Kupplungskomponenten der Formel (3) verwendet, worin K und K′ und Y und Y′ identische Bedeutungen haben.

8. Verfahren gemäss einem der Ansprüche 1 bis 7, dadurch gekennzeichnet, dass man als Kupplungskomponenten der Formelmethyl (3) oder als Gemisch der Kupplungskomponenten der Formel (3) Resorcin, 1-Phenyl-3-methyl-5-pyrazolon oder 1- oder 2-Naphthol, oder 2-Naphthylamin verwendet, wobei die Kupplungskomponenten substituiert sein können durch Halogen, $C_1$-$C_4$-Alkyl, Sulfamoyl, $C_2$-$C_5$-Alkanoylamino, $C_2$-$C_5$-Alkanoyl, $C_2$-$C_5$-Alkoxycarbonylamino, $C_1$-$C_4$-Alkoxy, Sulfo, Hydroxy oder Phenyl.

9. Verfahren gemäss einem der Ansprüche 1 bis 8, dadurch gekennzeichnet, dass man als Kupplungskomponente der Formel (3) 2-Naphthol oder 1-Phenyl-3-methyl-5-pyrazolon verwendet.

10. Verfahren gemäss einem der Ansprüche 1 bis 8, dadurch gekennzeichnet, dass man als Kupplungskomponente der Formel (3) 2-Naphthol verwendet.

11. Verfahren gemäss einem der Ansprüche 1 bis 10, dadurch gekennzeichnet, dass man eine Diazokomponente der Formel (2) verwendet, worin X Nitro oder Wasserstoff ist.

12. Verfahren gemäss einem der Ansprüche 1 bis 10, dadurch gekennzeichnet, dass man eine Diazokomponente der Formel (2) verwendet, worin X Nitro ist.

13. Verfahren gemäss einem der Ansprüche 1 bis 12, dadurch gekennzeichnet, dass Kupplung und Metallisierung in Gegenwart einer das Chrom- oder Kobaltatom abgebenden Verbindung, insbesondere in Gegenwart einer das Chromatom abgebenden Verbindung, erfolgt.

14. Verfahren gemäss einem der Ansprüche 1 bis 13, dadurch gekennzeichnet, dass man die Diazokomponente der Formel (2) und die Kupplungskomponente der Formel (3) bzw. die Summe der Kupplungskomponenten der Formel (3) im molaren Verhältnis von 0,9:1,0 bis 1,1:1,0 verwendet.

15. Verfahren gemäss einem der Ansprüche 1 bis 14, dadurch gekennzeichnet, dass man die Diazokomponente der Formel (2) bzw. die Summe der Kupplungskomponenten der Formel (3) zum Metallisierungsmittel im molaren Verhältnis von 1,7:1,0 bis 2,3:1,0 verwendet.

16. Verfahren gemäss einem der Ansprüche 1 bis 15, dadurch gekennzeichnet, dass man einen Ueberschuss von 1 bis 15 Molprozent an metallabgebender Verbindung verwendet.

17. Verfahren gemäss einem der Ansprüche 1 bis 16, dadurch gekennzeichnet, dass die Kupplung in Gegenwart der 5 bis 10-fachen molaren Menge, insbesondere der 6 bis 8-fachen molaren Menge, Natrium- und/oder Kaliumchlorid ausgeführt wird.

18. Die nach dem Verfahren gemäss den Ansprüchen 1 bis 17 erhaltenen Metallkomplexazofarbstoffe.

19. Verwendung der nach dem Verfahren gemäss den Ansprüchen 1 bis 17 hergestellten 1:2-Chrom- oder 1:2-Kobaltkomplexazofarbstoffe zum Färben oder Bedrucken natürlicher oder synthetischer textiler Fasermaterialien, insbesondere natürlicher oder synthetischer Polyamidfasermaterialien, sowie Leder.

**Claims**

1. A process for the preparation of a 1:2 metal complex azo dye of formula

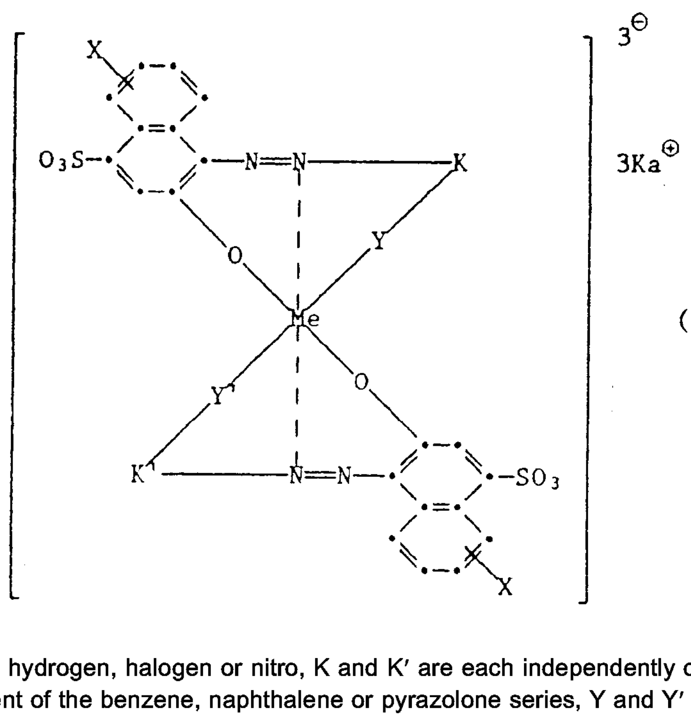

(1),

wherein each X is hydrogen, halogen or nitro, K and K′ are each independently of the other the radical of a coupling component of the benzene, naphthalene or pyrazolone series, Y and Y′ are each -O- or the radical -N(R), where R is hydrogen, $C_1$-$C_4$alkyl or phenyl, Me is chromium or cobalt and Ka is a cation, and Y and Y′ are attached to K and K′ adjacent to the azo group, by coupling and metallising, which comprises coupling, in aqueous solution, a diazo component of formula

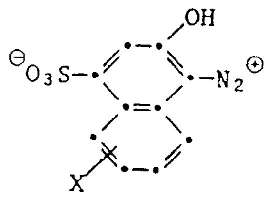

(2),

wherein X is as defined for formula (I), in the presence of the 5- to 10-fold molar amount of sodium chloride and/or potassium chloride, based on the molar amount of diazo component, and in the presence of a compound that donates the chromium or cobalt atom, to coupling components of formula

HK-YH and HK′-Y′H (3)

wherein K, K′, Y and Y′ are as defined for formula (1).

2. A process according to claim 1, wherein the coupling and metallising are carried out under an inert gas atmosphere, preferably under a nitrogen atmosphere.

3. A process according to either claim 1 or claim 2, wherein the coupling is carried out at a temperature from 5 to 100°C, preferably from 20 to 70°C and, in particular, from 35 to 50°C.

4. A process according to any one of claims 1 to 3, wherein the coupling is carried out at a pH from 9 to 11, in particular from 9.5 to 10.5.

5. A process according to any one of claims 1 to 4, wherein the metallising is carried out at a temperature from 40 to 160°C, preferably from 70 to 130°C.

6. A process according to any one of claims 1 to 5, wherein the metallising is carried out under a pressure of 1 to 6 bar, in particular 2 to 4 bar.

7. A process according to any one of claims 1 to 6, wherein a coupling component of formula (3) is used in which K and K′ and Y and Y′ have identical meanings.

8. A process according to any one of claims 1 to 7, wherein the coupling component of formula (3) methyl, or mixtur of coupling components of formula (3), used is resorciol, 1-phenyl-3-methyl-5-pyrazolone or 1- or 2-naphthol, or 2-naphthylamine, where the coupling components may be substituted by halogen, $C_1$-$C_4$alkyl, sulfamoyl, $C_2$-$C_5$alkanoylamino, $C_2$-$C_5$alkanoyl, $C_2$-$C_5$alkoxycarbonylamino, $C_1$-$C_4$alkoxy, sulfo, hydroxyl or phenyl.

9. A process according to any one of claims 1 to 8, wherein the coupling component of formula (3) used is 2-naphthol or 1-phenyl-3-methyl-5-pyrazolone.

10. A process according to any one of claims 1 to 8, wherein the coupling component of formula (3) used is 2-naphthol.

11. A process according to any one of claims 1 to 10, wherein a diazo component of formula (2) is used, in which X is nitro or hydrogen.

12. A process according to any one of claims 1 to 10, wherein a diazo component of formula (2) is used, in which X is nitro.

13. A process according to any one of claims 1 to 12, wherein coupling and metallising are carried out in the presence of a compound that donates the chromium or cobalt atom, in particular in the presence of a compound that donates the chromium atom.

14. A process according to any one of claims 1 to 13, wherein the diazo component of formula (2) and the coupling component of formula (3), or the sum of the coupling components of formula (3), are used in a molar ratio of 0.9:1.0 to 1.1:1.0.

15. A process according to any one of claims 1 to 14, wherein the diazo component of formula (2), or the sum of the coupling components of formula (3), is used in a molar ratio of 1.7:1.0 to to 2.3:1.0 to the metallising agent.

16. A process according to any one of claims 1 to 15, wherein the metal donor compound is used in an excess of 1 to 15 mole per cent.

17. A process according to any one of claims 1 to 16, wherein the coupling is carried out in the amount of the 5- to 10-fold molar amount, in particular of the 6- to 8-fold molar amount, of sodium chloride and/or potassium chloride.

18. A metal complex azo dye obtained by a process as claimed in claims 1 to 17.

19. The use of a 1:2 chromium or 1:2 cobalt complex azo dye prepared by a process as claimed in claims 1 to 17 for dyeing or printing natural or synthetic textile fibre materials, in particular natural or synthetic polyamide fibre materials, as well as leather.

## Revendications

1. Procédé de préparation de complexes 1:2 métal-colorant azoïque de formule

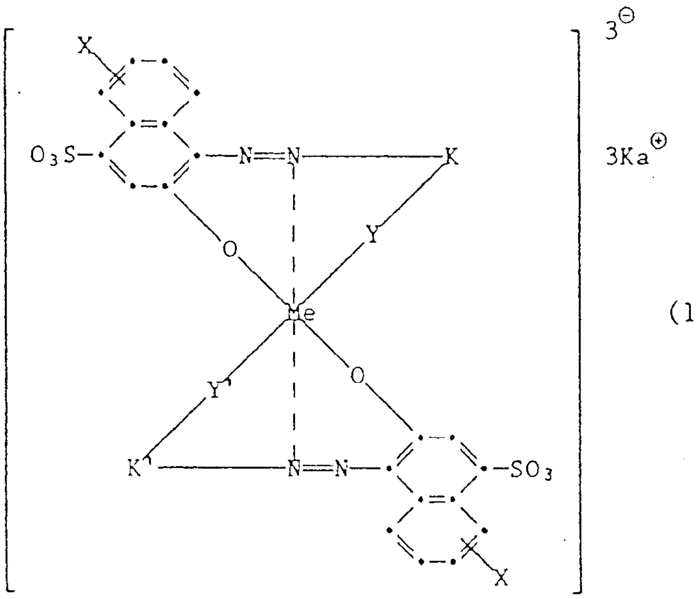

(1),

dans laquelle chaque X est un atome d'hydrogène, un atome d'halogène ou un groupe nitro, K et K′ représentent, indépendamment l'un de l'autre, le reste d'un copulant de la série du benzène, du naphtalène ou de la pyrazolone, Y et Y′ représentent, chacun, le reste -O- ou -N(R)-, R étant un atome d'hydrogène ou un groupe alkyle en $C_{1-4}$ ou phényle, Me est un atome de chrome ou de cobalt et Ka est un cation, et Y et Y′ sont liés à K et K′ en position voisine du groupe azo, par copulation et métallation, caractérisé en ce qu'on fait copuler, en solution aqueuse, un composant diazo de formule

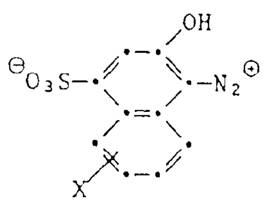

(2),

dans laquelle X a la définition indiquée pour la formule (1), en présence d'un nombre de moles de chlorure de sodium et/ou de potassium 5 à 30 fois supérieure au nombre de moles de composant diazo, et en présence d'un composé donneur d'atome de chrome ou de cobalt, avec des copulants de formules

HK-YH et HK′-Y′H (3),

dans lesquelles K, K′, Y, Y′ ont les définitions indiquées pour la formule (1).

2. Procédé selon a revendication 1, caractérisé en ce que la copulation et la métallation s'effectuent dans une atmosphère de gaz inerte, en particulier en atmosphère d'azote.

3. Procédé selon la revendication 1 ou 2, caractérisé en ce que la copulation s'effectue à une température de 5 à 100°C, de préférence de 20 à 70°C, en particulier de 35 à 50°C.

4. Procédé selon une des revendications 1 à 3, caractérisé en ce que la copulation s'effectue à un pH de 9 à 11, en particulier de 9,5 à 10,5.

5. Procédé selon une des revendications 1 à 4, caractérisé en ce que la métallation s'effectue à une température de 40 à 160°C, de préférence de 70 à 130°C.

6. Procédé selon une des revendications 1 à 5, caractérisé en ce que la métallisation s'effectue sous une pression de 1 à 6 bar, en particulier de 2 à 4 bar.

7. Procédé selon une des revendications 1 à 6, caractérisé en ce qu'on utilise un copulant de formule (3), dans laquelle K et K′ et Y et Y′ ont des définitions identiques.

8. Procédé selon une des revendications 1 à 7, caractérisé en ce que qu'on utilise, comme copulant de formule (3) ou comme mélange de copulants de formule (3), le résorcinol, la 1-phényl-3-méthyl-5-pyrazolone,

le 1- ou 2-naphtol, ou la naphtylamine, ces copulants pouvant être substitués par halogène, alkyle en $C_{1-4}$, sulfamoyle, alcanoyl ($C_{2-5}$)-amino, alcanoyle en $C_{2-5}$, alcoxy($C_{2-5}$)carbonylamino, alcoxy en $C_{1-4}$, sulfo, hydroxy ou phényle.

9. Procédé selon l'une des revendications 1 à 8, caractérisé en ce qu'on utilise, comme copulant de formule (3), le 2-naphtol ou la 1-phényl-3-méthyl-5-pyrazolone.

10. Procédé selon une des revendication 1 à 8, caractérisé en ce qu'on utilise, comme copulant de formule (3), le 2-naphtol.

11. Procédé selon une des revendications 1 à 10, caractérisé en ce qu'on utilise un composant diazo de formule (2), dans laquelle X est nitro ou hydrogène.

12. Procédé selon une des revendications 1 à 10, caractérisé en ce qu'on utilise un composant diazo de formule (2), dans laquelle X est nitro.

13. Procédé selon une des revendications 1 à 12, caractérisé en ce que la copulation et la métallation s'effectuent en présence d'un composé donneur d'atome de chrome ou de cobalt, en particulier en présence d'un composé donneur de chrome.

14. Procédé selon une des revendications 1 à 13, caractérisé en ce qu'on utilise le composant diazo de formule (2) et le copulant de formule (3) ou l'ensemble des copulants de formule (3) dans un rapport molaire de 0,9:1,0 à 1,1:1,0.

15. Procédé selon une des revendications 1 à 14, caractérisé en ce qu'on utilise le composant diazo de formule (2) ou l'ensemble des copulants de formule (3), par rapport à l'agent métallant, dans un rapport molaire de 1,7:1,0 à 2,3:1,0.

16. Procédé selon une des revendications 1 à 15, caractérisé en ce qu'on utilise un excès de 1 à 15% de composé donneur de métal, en moles.

17. Procédé selon une des revendications 1 à 16, caractérisé en ce qu'on effectue la copulation en présence de 5 à 10 fois la quantité molaire, en particulier de 6 à 8 fois la quantité molaire, de chlorure de sodium et/ou de potassium.

18. Complexe métal-colorant azoïque obtenus d'après le procédé selon les revendications 1 à 17.

19. Utilisation des complexes 1:2 chrome- ou 1:2-cobalt-colorant azoïque, préparés d'après le procédé selon les revendication 1 à 17, pour la teinture ou l'impression des matières textiles fibreuses naturelles ou synthétiques, en particulier des matières en polyamides naturels ou synthétiques, ainsi que du cuir.